# EUROPEAN PATENT APPLICATION

(11) **EP 4 580 009 A1**
(43) Date of publication of application: **02.07.2025**
(21) Application number: 24220457.6
(22) Date of filing: 17.12.2024
(51) Int. Cl.: H02K 3/52

(54) **MOTOR**

(30) Priority: 28.12.2023 JP 2023222357
(71) Applicant: TOYOTA JIDOSHA KABUSHIKI KAISHA, Aichi-ken, 471-8571 (JP)
(72) Inventor: YOSHIOKA, Kentaro, Toyota-shi 471-8571 (JP); SUZUKI, Yasunori, Toyota-shi 471-8571 (JP); TAKAHARA, Yoshihiro, Toyota-shi 471-8571 (JP); TAKAMURA, Yasuyuki, Toyota-shi 471-8571 (JP); WATANABE, Kohei, Toyota-shi 471-8571 (JP); DEGUCHI, Junichi, Toyota-shi 471-8571 (JP); ASAOKA, Hironori, Toyota-shi 471-8571 (JP)
(74) Representative: TBK

(57) **Abstract**

A motor (2) includes a plurality of coils (6) wound around a stator (4), and a neutral bus bar (10) connecting the plurality of coils (6) to each other. A plurality of lead wires (7u, 7v, 7w) connected to the plurality of coils (6) respectively is bent in a radial direction of the stator (4) from an axial direction of the stator (4). The neutral bus bar (10) is connected to a portion of the plurality of lead wires (7u, 7v, 7w) that extends in the radial direction.

## Description

### BACKGROUND OF THE INVENTION

### 1. Field of the Invention

The technology disclosed in the present specification relates to a motor.

### 2. Description of Related Art

In a three-phase alternating current motor, one end of each of three coils of U-phase, V-phase, and W-phase is connected to each other at a neutral point. The one end of the three coils is connected by a metal piece called a bus bar (Japanese Unexamined Patent Application Publication No. 2016-127798 (JP 2016-127798 A), WO 2018/180798, Japanese Unexamined Patent Application Publication No. 2021-10252 (JP 2021-10252 A)). Hereinafter, the three-phase alternating current motor will be referred to simply as a "motor", and the bus bar that connects the ends of the three coils to each other will be referred to as a "neutral bus bar". In each of the motors disclosed in JP 2016-127798 A, WO 2018/180798, and JP 2021-10252 A, the neutral bus bar is disposed on an outer side of the coils in an axial direction of the motor.

### SUMMARY OF THE INVENTION

When the neutral bus bar is disposed on the outer side of the coils in the axial direction, a length of the motor in the axial direction becomes longer. The present specification provides a motor in which placement of the neutral bus bar is improvised, thereby enabling the length of the motor in the axial direction to be reduced as compared to conventional motors.

A motor disclosed in the present specification includes a plurality of coils that is wound on a stator, and a neutral bus bar connecting the coils to each other. A plurality of lead wires connected to the plurality of coils respectively is bent in a radial direction from an axial direction of the stator. The neutral bus bar is connected to a portion of a plurality of the lead wires that extends in the radial direction. In the motor disclosed in the present specification, the lead wires are bent in the radial direction, and the neutral bus bar is connected to the portions extending in the radial direction. Accordingly, the entire neutral bus bar can be brought closer to a center of the stator. This structure enables the length of the motor in the axial direction to be shortened.

Details and further improvements of the technology disclosed in the present specification will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view of a motor according to an embodiment, as viewed from an axial direction;
FIG. 2 is a perspective view of a range of a dashed-line rectangle II in FIG. 1;
FIG. 3 is a perspective view of a neutral bus bar;
FIG. 4 is a diagram of the motor as viewed from a direction of arrow IV in FIG. 1; and
FIG. 5 is a diagram of the motor as viewed from a direction of arrow V in FIG. 1.

### DETAILED DESCRIPTION OF EMBODIMENTS

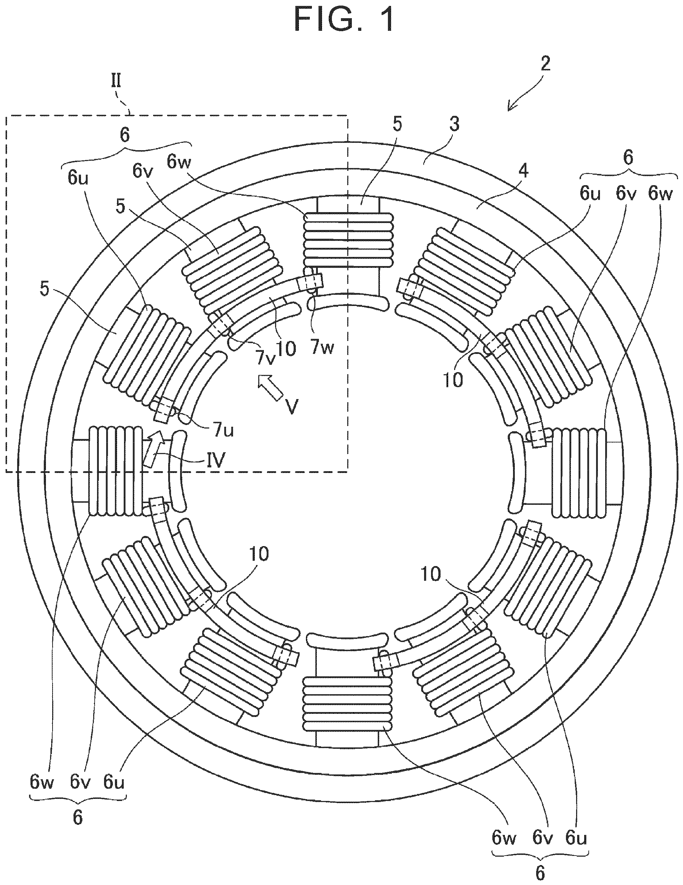

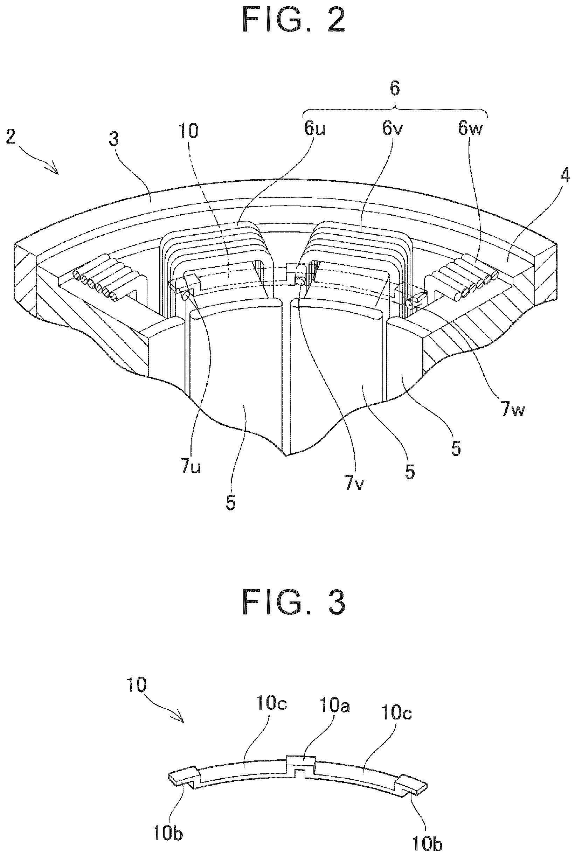

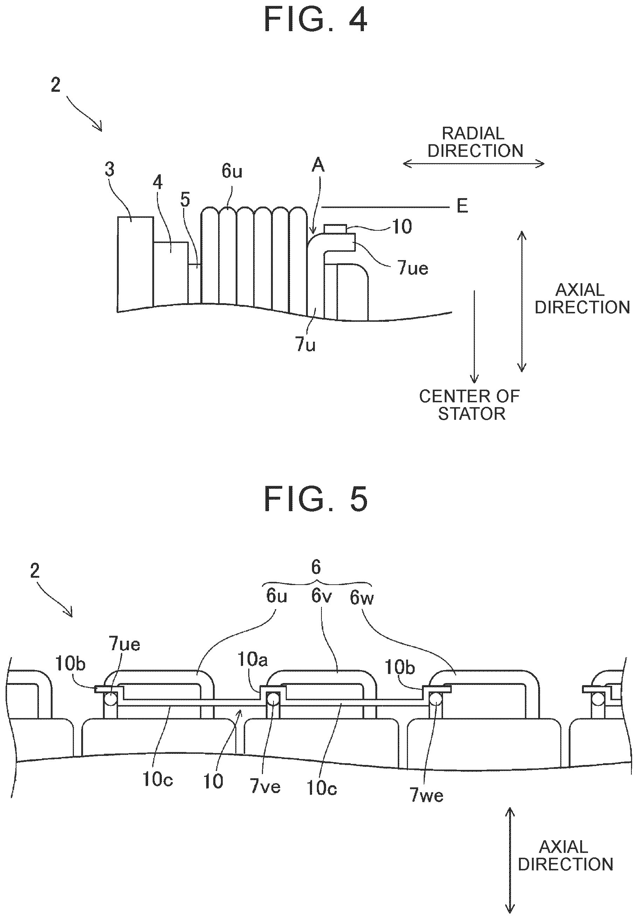

A motor 2 according to an embodiment will be described with reference to the drawings. FIG. 1 is a plan view of the motor 2 as seen from an axial direction thereof. FIG. 1 illustrates a state in which a cover of the motor 2 is removed. FIG. 2 is a perspective view of a range of a dashed-line rectangle II in FIG. 1. Note however, that in FIG. 2, a neutral bus bar 10 is drawn in hidden outline. A rotor is omitted from illustration in FIGS. 1 and 2. FIG. 3 is a perspective view of the neutral bus bar 10. FIG. 4 is a diagram of the motor 2 as viewed from a direction of arrow IV in FIG. 1, and FIG. 5 is a diagram of the motor 2 as viewed from a direction of arrow V in FIG. 1.

The motor 2 includes a stator 4. The stator 4 is accommodated in a housing 3. The motor 2 is an 8-pole, 12-slot three-phase alternating current motor, and the stator 4 is provided with 12 teeth 5, with a coil 6 wound around each of the teeth 5. Three-phase alternating current with phase difference of 120 degrees flows through each of three adjacent coils 6u, 6v, and 6w. The motor 2 includes four coil sets of the coils 6u, 6v, and 6w. In each coil set, alternating current with phase difference of 120 degrees flows through three adjacent coils.

The three coils 6u, 6v, and 6w are star-coupled. Star coupling refers to a structure in which one of the ends of the three coils 6u, 6v, and 6w are connected to each other. A point of junction of the three coils 6u, 6v, and 6w is referred to as "neutral point". Respective lead wires 7u, 7v, and 7w of the coils 6u, 6v, and 6w are connected to each other via the neutral bus bar 10. As illustrated in FIG. 1, the motor 2 includes four neutral bus bars 10, and each of the neutral bus bars 10 connects three coils 6u, 6v, and 6w that are adjacent to each other.

The neutral bus bar 10 is an elongated metal plate having a U-shaped portion 10a provided approximately at the middle thereof and L-shaped portions 10b provided at both ends thereof. The U-shaped portion 10a and the L-shaped portions 10b are bent portions, formed by bending the neutral bus bar 10. Out of the lead wires 7u, 7v, and 7w of the three coils 6u, 6v, and 6w, the lead wire 7v positioned at the middle is fitted into the U-shaped portion 10a of the neutral bus bar 10. At this time, the neutral bus bar 10 can be positioned by the U-shaped portion 10a, and accordingly clamps used when welding the lead wires 7u, 7v, 7w to the neutral bus bar 10 are not required. Out of the three lead wires, the lead wires 7u and 7w on both sides are in contact with the respective L-shaped portions 10b of the neutral bus bar 10. Each of the three lead wires 7u, 7v, and 7w is welded to the neutral bus bar 10, and the three coils 6u, 6v, 6w are electrically connected to each other via the neutral bus bar 10.

The lead wires 7u, 7v, and 7w are positioned at one end of the motor 2 (stator 4) in the axial direction. Also, the lead wires 7 u, 7 v, and 7 w are positioned on an inner side of the coil 6 in a radial direction of the stator 4. The lead wires 7u, 7v, and 7w extend in the axial direction of the stator 4, and distal ends thereof are bent in the radial direction of the stator 4. The distal ends of the lead wires 7u, 7v, and 7w will be referred to as distal ends 7ue, 7ve, and 7we, respectively (see FIG. 5). Note that the term "distal end" refers to a portion of each lead wire extending in the radial direction. The distal ends 7ue, 7ve, and 7we extend in the radial direction of the stator 4, and the neutral bus bar 10 is fixed to the distal ends 7ue, 7ve, and 7we.

In FIG. 4, symbol E indicates an end of the coil 6u in the axial direction of the stator. The distal end 7ue of the lead wire 7u is positioned on a side closer to the center of the stator 4 in the axial direction than an end E of the coil 6u is. The same also applies to the lead wires 7v and 7w of the coils 6v and 6w. The neutral bus bar 10 connected to the distal ends 7ue, 7ve, and 7we is also positioned closer to the center of the stator 4 in the axial direction than ends E of the coils 6 are. The motor 2 is structured such that the neutral bus bar 10 is not positioned on an outer side of the coil 6 (on a side far from the center of the stator than the coil 6) in the axial direction, thereby enabling the length of the motor 2 in the axial direction to be shortened.

In the neutral bus bar 10, extending portions 10c connect the U-shaped portion 10a and the L-shaped portions 10b. The extending portions 10c are each positioned between the distal end 7ve of the lead wire 7v at the middle and the distal ends 7ue (7we) of the lead wires 7u (7w) on the ends. According to this structure, the extending portions 10c play a role in keeping distances between the distal end 7ve and the distal ends 7ue (7we) constant.

Some features of the motor 2 are listed below. The motor 2 includes a plurality of the coils 6u, 6v, 6w wound around the stator 4, and the neutral bus bar 10 connecting the coils to each other. The lead wires 7u, 7v, and 7w of the coils are positioned on one end in the axial direction of the stator. Each of the lead wires 7u, 7v, and 7w is bent in a radial direction from the axial direction of the stator. The neutral bus bar 10 is connected to portions (distal ends 7ue, 7ve, and 7we) of a plurality of the lead wires 7u, 7v, and 7w that extend in the radial direction of the stator. This structure enables the length of the motor 2 in the axial direction to be shortened.

The neutral bus bar 10 is positioned on a side closer to the center of the stator 4 than the ends E of the coils 6 in the axial direction of the stator. The neutral bus bar 10 has the U-shaped portion 10a that surrounds the lead wire 7v on three sides. Note that the U-shaped portion may be changed to a V-shaped portion that surrounds the lead wire 7v on two sides. The neutral bus bar 10 has the L-shaped portions 10b at both ends thereof, and the lead wires 7u and 7w are each in contact with the L-shaped portions 10b. The L-shaped portions 10b may be changed to U-shaped portions surrounding the lead wires 7u (7w) on three sides, or may be changed to I-shaped portions that come into contact with a part of the lead wire 7u (7w).

Points to be noted regarding the technology described in the embodiments will be described. The neutral bus bar 10 is positioned on the side closer to the center of the motor than the ends E of the coils 6 in the axial direction. In other words, the neutral bus bar 10 is positioned between both ends of the coils 6 in the axial direction.

The motor 2 of the embodiment includes the stator 4 with 12 slots (12 coils). The technology disclosed in present specification can also be applied to stators with three slots, six slots, and so forth.

In the drawings, only the lead wires 7u, 7v, and 7w from the one end of the coils 6u, 6v, and 6w are rendered, and lead wires from the other end are omitted from illustration. The other lead wires of the coils 6u, 6v, 6w are connected to an inverter by another bus bar that is omitted from illustration.

The neutral bus bar 10 is made of a metal plate. The neutral bus bar 10 may be made of a metal rod. The lead wires 7u, 7v, and 7w of the respective three coils 6u, 6v, and 6w are positioned inside the coil 6 in the radial direction of the stator 4. The lead wires 7u, 7v, and 7w extend in the axial direction of the stator 4, and the distal ends 7ue, 7ve, and 7we thereof are bent in the radial direction of the stator 4. The distal ends 7ue, 7ve, and 7we of the lead wires 7u, 7v, and 7w extend toward the center of the stator 4. Also, the lead wires 7u, 7v, and 7w may be positioned on the outer side of the coil 6 in the radial direction of the stator 4. In this case, the distal ends 7ue, 7ve, and 7we extend toward the outer side in the radial direction of the stator 4. The neutral bus bar 10 is disposed on the outer side of the coil 6 in the radial direction of the stator.

The neutral bus bar 10 may be fixed to the stator 4 with an insulator interposed therebetween. Alternatively, the neutral bus bar 10 may be fixed to the housing 3 with an insulator interposed therebetween.

Although specific examples of the invention are described in detail above, these are only exemplary, and are not intended to limit the scope of the claims. The technology described in the claims encompasses various modifications and alterations of the specific examples exemplified above. The technical elements described in the present specification or the drawings exhibit technical utility alone or in various combinations, and are not limited to the combinations set forth in the claims as originally filed. Also, the technology exemplified in the present specification or the drawings can achieve a plurality of objects at the same time, and has technical utility in itself by achieving one of the objects.

## Claims

1. A motor (2) comprising:
a plurality of coils (6) that is wound on a stator (4); and
a neutral bus bar (10) connecting the plurality of coils (6) to each other, wherein
a plurality of lead wires (7u, 7v, 7w) connected to the plurality of coils (6) respectively is bent in a radial direction of the stator (4) from an axial direction of the stator (4), and
the neutral bus bar (10) is connected to a portion of the plurality of the lead wires (7u, 7v, 7w) that extends in the radial direction.

2. The motor (2) according to claim 1, wherein the neutral bus bar (10) is positioned, in the axial direction, on a side closer to a center of the stator (4) than an end of the plurality of coils (6).

3. The motor (2) according to claim 1 or 2, wherein the neutral bus bar (10) includes at least one U-shaped portion surrounding at least one lead wire of the plurality of lead wires (7u, 7v, 7w) on three sides, or at least one V-shaped portion surrounding at least one lead wire of the plurality of lead wires (7u, 7v, 7w) on two sides.

4. The motor (2) according to claim 3, wherein the at least one U-shaped portion or the at least one V-shaped portion is a bent portion fashioned by bending the neutral bus bar (10).

5. The motor (2) according to claim 1, wherein the neutral bus bar (10) is connected only to a plurality of the plurality of lead wires (7u, 7v, 7w).

6. The motor (2) according to claim 1, wherein the neutral bus bar (10), as viewed in the radial direction, is positioned between two ends of the plurality of coils (6) in the axial direction.
